(19) Europäisches Patentamt
European Patent Office
Office européen des brevets

(11) **EP 3 511 792 A1**

(12) **EUROPEAN PATENT APPLICATION**

(43) Date of publication:
**17.07.2019 Bulletin 2019/29**

(51) Int Cl.:
***G05B 19/418*** (2006.01)  ***G06Q 10/06*** (2012.01)

(21) Application number: **18151425.8**

(22) Date of filing: **12.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Siemens Aktiengesellschaft**
**80333 München (DE)**

(72) Inventors:
• **Batsiukov, Kiryl**
**81379 München (DE)**
• **Fishkin, Alexey**
**81827 München (DE)**
• **Huang, Yi**
**85570 Markt Schwaben (DE)**
• **Murarasu, Alin**
**81825 München (DE)**
• **Roshchin, Mikhail**
**81925 München (DE)**

(54) **INDUSTRIAL PROCESS DATA PROCESSING**

(57) Present invention concerns a method and a system for processing data concerning an industrial process. The method comprises steps of acquiring a parameter related to the industrial process; receiving a processing configuration; processing the acquired parameter according to said configuration; and providing the processed parameter.

FIG 4

EP 3 511 792 A1

**Description**

An industrial application comprises a machine performing a predetermined task. The machine may for instance be relatively simple like an electric motor, a valve or an electric magnet. In a more complex example, the machine may comprise an injection moulding press, an industrial robot or a bottling plant. The machine may be composed of an arrangement of other machines and several machines may work together to form a system. In order to control the operation of the overall machine or system it is often necessary to control several of its parts. This may be true for machine operation as well as for securing machine availability. To this ends, machine data related to the process may be collected and processed.

An industrial machine may be equipped with one or more contraptions that pick up at least one operational parameter regularly or on an event driven basis. The acquired data may be stored for a predetermined time and processing may take place on stored data. The number of data points taken on an industrial machine has increased lately and may exceed 200 even for a simpler machine like an electric motor, wherein each point represents one operation- or environment-related parameter of the motor. Given a good understanding of the machine, the acquired data may permit determination of complex parameters like a remaining machine life time.

The data picked up from more than one industrial machine may be put to more use through combined data analysis. By comparing performance of machines of similar or the same type employed for different purposes or in different environments, machine stress and component wear out may be analysed. Production data of one machine may be related to that of a different machine on the same plant. Complex and high level data analysis may lead to completely new insights and perspectives.

It is often difficult to determine a parameter representative of a desired status of the process, its environment or a processed item from available information. Relationships between the data may change and processing and error detection may be complex. It is therefore an object of present invention to provide an improved technique for industrial process data processing. The invention solves the given objective through the subject matter defined in independent claims. Preferred embodiments are given in dependent claims.

Disclosure of the Invention

Present invention concerns a method and a system for processing data concerning an industrial process. The method comprises steps of acquiring a parameter related to the industrial process; receiving a processing configuration; processing the acquired parameter according to said configuration; and providing the processed parameter.

The method may allow processing of singular or sequential acquisitions in a modular and easy to use fashion. The processing configuration may be changeable at any time so that a data characteristic may be reflected or a model for said relationship may be improved quickly. Definition of the processing configuration may require only little knowledge about the data to be processed or the way processing is actually implemented. This allows for eased higher level analysis or control of said industrial process.

Processing may be performed on a plurality of time-related acquisitions of the same parameter. Difficulties related to processing of a data stream instead of singular data may be taken care of on the implementation side. Such difficulties may comprise outliers, noise, data gaps or unsynchronised data.

Said processing configuration may comprise a selection of an operation from a predetermined plurality of available operations. Selection may occur interactively, that is, the same data interface may be used for inquiring about available operations as well as for selecting or configuring an operation to use. This enables ongoing improvement of offered operations or easy adding new of operations.

Said processing configuration may also comprise a user-defined function. The user-defined function may especially be given in the form of a computer program. Unlike a mesh of readily defined operations the computer program may offer finer grain operations, more complex execution logic or improved speed. For example, the operations may be restricted to a predetermined set. The set may be expandable via another user function or a predetermined function. The execution logic may support things like concurrent process execution, inter process signalling, mutually exclusive variables or processes, physical resource control or increased precision processing. An environment in which the user-defined process may run may also be advertised.

Said processing configuration may further comprise the application of two or more operations. Said operations may especially be run in sequence without requiring a user or user process to collect an output of a first operation and to feed it back into a second operation. A series of operations may be defined that perform different steps of processing data, especially time series data.

Another parameter related to said industrial process may be acquired, wherein said processing configuration comprises an operation combining said acquired data and said other acquired parameter. By combining more than one parameter or time series of said parameters it is possible to provide derived values that act like output from a sensor for the industrial process even if said sensor does not physically exist. One speaks also of a "soft" or "virtual" sensor. The method may be implemented on a processing platform where data acquisitions from a plurality of parameters of an industrial process may be collected. This allows processing a plenitude of different parameters so that derived information can be complex and meaningful. Optionally information from different industrial processes may be processed to allow information transfer, benchmarking or global information analysis.

An event may be generated if the result of an operation fulfils a predetermined condition. The result may be an intermediate or final result in a series of processing steps. The event may for instance represent a predetermined condition of the industrial process (e.g. termination of a task), of a machinery involved in carrying out the process (e.g. machine failure) or of an item that is processed (e.g. item missing or scrap). According analytical or control action may then be taken. The event may be stored in a predetermined storage like a log file or a database for later reference.

A notification may be generated if the result of an operation fulfils a predetermined condition. The notification may be generated in response to above mentioned event. One or more parties may be actively informed about the occurrence of said condition or event. A party may especially comprise the entity that configured the processing as laid out above. Processing and evaluation of said data may thus be separated from guarding compliance of the data with a predetermined condition. It may for instance be sufficient for a process to be informed if values of a predetermined parameter exceed a predetermined threshold without actually receiving said parameter. Information exchange overhead may be reduced; system processing speed may be increased.

Said processing configuration may comprise a subscription to a predetermined notification. The notification may be of a predetermined kind or class. A process may for instance subscribe to notifications indicating a critical condition of one predetermined subsystem involved in carrying out the industrial process. However, notifications about a status of an item processed by said subsystem may not be relevant for that process and thus be unsubscribed. Employing a plurality of independent processes for analysis or control of said industrial process may thus be eased. Each resulting process may be easier to develop or configure. The processes may be runnable in parallel. Scaling of said processes may be improved over a monolithic application.

The processed parameter may be stored in storage so that reference to the parameter may be made later on. Data underlying the processed parameter may also be stored. In storing, a relationship between unprocessed (raw) and processed data may be indicated.

The process may be controlled on the basis of the pre-processed parameter. A controlling method may use above indicated processed data, and the controlling method may follow any desired practice.

A system for processing data concerning an industrial process comprises a computing platform; the computing platform having a data interface that is connectable, via a wide area data network, to a physical entity; wherein the physical entity is adapted to provide an acquisition of a parameter that is related to said process; wherein the platform is adapted to carry out a method disclosed herein. The system may thus be used to supervise or control the process or to gain further insights into how it functions or behaves. Advantages or features of the system or device may apply to the method and vice versa.

The invention is intended to be used in the context of industrial processes that are monitored, controlled or networked with methods commonly subsumed as "Industry 4.0". That is, process related data may be acquired wherever a part of the process is executed and acquired information may be sent to a centralized service that stores and/or processes the data.

Centralized processing allows improved scaling of hardware and processing of information coming from distributed sources. A comprehensive view on the industrial process in question may more easily be gained.

In the system, the physical entity may comprise a data acquisition unit located in a domain where the process is carried out, the data acquisition unit comprising at least one interface connectable to a sensor that is adapted to acquire said parameter. The data acquisition unit may help to collect and provide information relevant for said process.

Brief Summary of the Enclosed Figures

The above-described properties, features and advantages of present invention as well as the way they are achieved will be made clearer and better understandable in the light of the following discussion, making reference to exemplary embodiments shown in accompanying figures, in which

Figure 1     shows data processing for one or more industrial systems;

Figure 2     shows a flow chart of an exemplary method for processing data of an industrial process;

Figure 3     shows an exemplary data flow; and

Figure 4     shows three exemplary options for merging data.

Detailed Exemplary Embodiments of the Invention

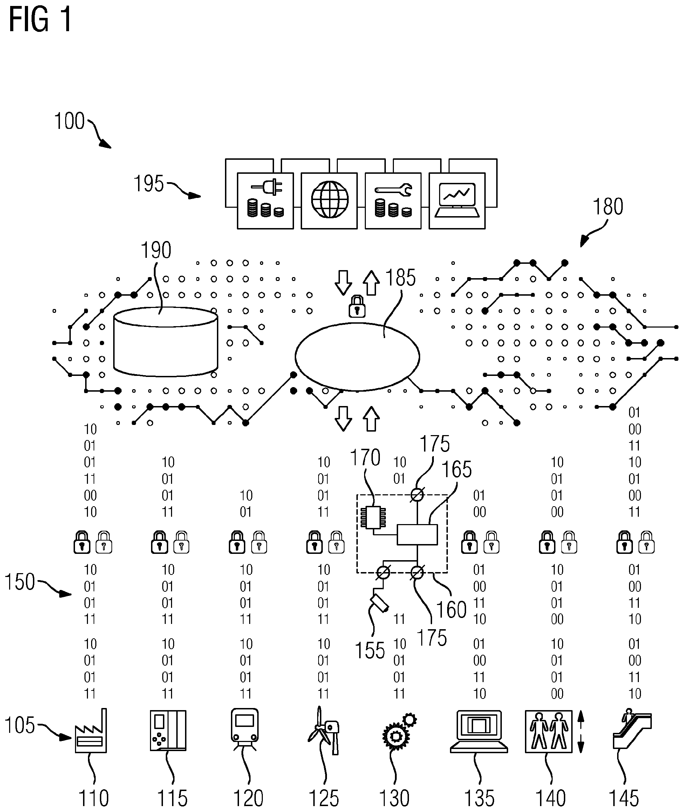

Figure 1 shows a system 100 for data processing for one or more industrial processes 105. Exemplary industrial processes 105 shown in the bottom section of Figure 1 include industrial processing 110, building technology 115, mobility 120, wind power 125, industrial drives 130, health care applications 135, an elevator 140 and an escalator 145. More possible processes 105 include smart city applications, energy management or digital factory. The given selection of industry processes 105 is exemplary and non-limiting. Also, process 105 classification is paradigmatic and a given industrial process 105 may comprise elements of more than one of the given processes 105.

Complexity of a process 105 and deviation of the process 105 from a general approach may differ greatly in different fields. While for instance variance between any two given escalator 145 processes may be limited, process variance in industrial processing 110 may be very high and depend on an object that is to be processed or manufactured. For managing the process 105, high level functionality like determination of expected machinery lifetime, cost factor estimation or supply chain management may require a data model for the process 105 or a class of services 105 the service 105 at hand is part of.

Each process 105 yields data 150 that describes the operation of a technical contraption like a machine, a system, a plant or a production system. Such data may comprise an item count, a speed of movement, acceleration, a temperature, a pressure, a force or torque, a current, a voltage, a distance or any other parameter that is related to the process 105 at hand. Some of the data 150 may already be available in the process 105 in digital form, for instance an ambient temperature that is measured by a different system or a rotational speed requirement. Other data 150 may be sampled with the help of a dedicated sensor 155 and/or a sampling unit 160. The sampling unit 160 may comprise a computational unit 165, local memory 170 and/or interfaces 175 to the contraption at hand, the sensor 155 or a remote data processing entity 180. It is preferred that the machine and/or the sampling unit 165 is adapted to exchange data 150 with the remote data processing entity 180 in encrypted form.

The sampling unit 160 may comprise a microcomputer or microcontroller adapted for digital data processing, especially in the form of the computational unit 165. A method for data processing disclosed herein may be available in form of a computer program product with program code means and the sampling unit 160 may be adapted to implement said method or a part of it by executing the program code means. The computer program product may be stored on a computer readable medium or be transferrable from one system to another by means of a wireless or wire bound data connection.

The processing entity 180 is preferred to implement a service 185 on any desired hardware, especially abstracted from the hardware as a cloud based service 185. This way, the physical location the service 185 is executed at and the physical resources allocated for the service 185 may vary transparently. This may allow for improved resource scaling or location based servicing. The processing entity 180 may comprise a computational unit 165 and/or other elements discussed above with respect to sampling unit 160.

In one preferred option, the service 185 is part of a data processing environment that provides certain functionality for data 150 acquisition, storage, processing or provisioning. A preferred processing environment is known under the name MindSphere. The processing environment may run on top of a cloud service such as AWS (Amazon Web Services) or any other data processing platform.

The service 185 is preferred to have available a storage 190 like a database or a computer file system, especially for data 150. The storage 190 may be implemented on any desired hardware, including semiconductor memory or rotating media magnetic data storage. The storage 190 may itself be implemented as a service, especially a cloud based service, so that from the service's 185 point of view physical constraints or features of the implementation of the storage 190 like maximum capacity or physical location of data holding medium are of no concern and may not even be available. The data 150 is generally time-related in that the reading of a parameter has an associated time which may comprise a date and/or a time. A series of data 150 points over time may form a data series. Information in the storage 190 may be processed, compressed, swapped or dropped after it has been held for longer than a predetermined time or when an available amount of information exceeds a predetermined threshold.

It is proposed to provide the service 185 such that a higher level process 195 may request data 150 and the process 195 returns the requested data 150 in processed or pre-processed form. Request and/or response may be encrypted and/or authenticated. Processing of data 150 may take place after the actual request or at an earlier time after the data 150 is made available. Processed or partly processed data 150 may be stored in storage 190. Data 150 is called raw when it is unaltered from the form it is received from a machine, process 105 or unit 160 by the service 185. Data 150 is called pre-processed after it is made better processable without changing its meaning or context. Pre-processing may for instance identify or remove outliers, mark or fill data gaps, identify or compensate measurement noise or bias. Pre-processing may perform statistical operations on the raw data 150. Data 150 is called processed after several parameters have been combined, deeper statistical analysis has been performed or an altogether new parameter is provided on the basis of existing raw or pre-processed data 150.

The service 185 is preferred to provide pre-processed data on a process 105 to a higher level process 195 via an application program interface (API). Raw and/or processed data 150 may also be made available. The higher level process 195 may not need to worry about basic data processing like data smoothing, outlier detection, noise reduction or key factor determination.

It is proposed that the processing offered by the service 185 will generally be on an abstraction layer that is higher than data sampling and relaying but lower than modelling the underlying industrial process 105. It is especially preferred that the process 195 makes sense of the data 150 in context with a given process 105, while pre-processing or processing of service 185 may be targeted at the data 150 itself, not paying heed to what meaning it carries inside the process 105. Processing of the process 195 may comprise any desired numerical, symbolic or other processing. In one option, the process 195 is designed to provide a visualisation of the data 150, especially for human reception.

In one figurative example an industrial process 105 at hand comprises the fabrication of wooden planks out of timber with a lumber mill with an oscillating saw. Raw data 150 may comprise an oscillation frequency of the saw, the length of wood that has been cut since the last sharpening of the saw blade and the amount of wood that needs to be cut until a predetermined date. The raw data 150 may be pre-processed to be for instance noise-reduced, smoothed or checked to lie within a predetermined range. The data 150 may be further processed to yield a key performance indicator like the lumber mill utilization in per cent. Other processing may comprise trend prediction, calculation of an indirect signal or anomaly detection.

The data 150 provided to the higher level process 195 may form an improved basis on which said process 195 may control the process 105, react on a predetermined condition, relate the process 105 to another process 105 or use external data to gain improved insight or control over the process 105. Such processing generally requires knowledge on the process 105 and its implications and is often done using a mathematical model for said process 105.

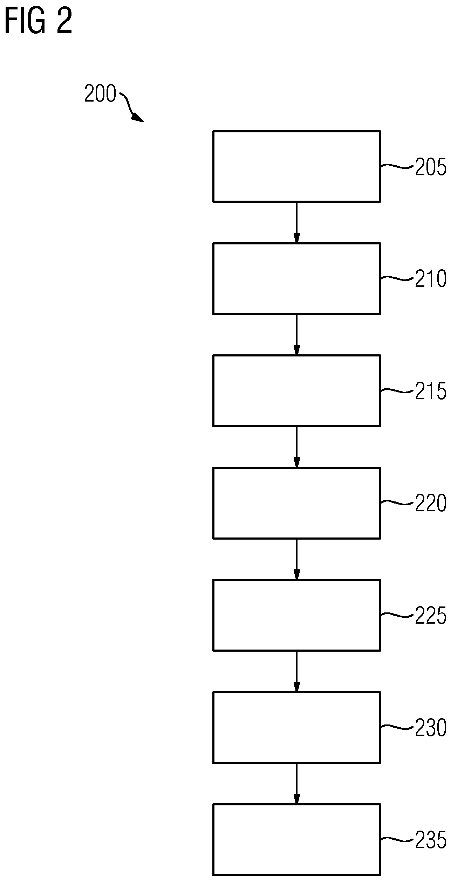

Figure 2 shows a flow chart of a method 200 for processing data concerning an industrial process 105. The method 200 is preferred to be adapted to run on a system 100 of the kind that is described with reference to Figure 1.

In a step 205, a parameter of a machine involved in the industrial process 105 may be acquired. Acquisition is generally the action of determining and/or providing an information or data 150, which is also called acquisition herein. The data 150 is preferred to comprise the value of a parameter, for instance a numerical value corresponding to a predetermined unit (like meters), expressing for example a distance. An indication of the time corresponding to the data 150, like the sampling time, may be processed alongside the acquired data 150.

Acquisition may comprise retrieving digital or analog data 150 that is available in the machine connected to the process 105 or a device controlling the process 105. The industrial process 105 may comprise manufacturing a product on a manufacturing line and acquiring may for example comprise requesting a machine parameter from a production line controller controlling at least one machine on the line and evaluating a response. Acquiring may also comprise taking a measurement through use of a sensor 155. The sensor 155 may for instance be adapted to measure an angle, a length, a count, a position, a movement, a speed, acceleration, a current, a voltage, a power, a force, an age or any other kind of measurable data 150. The measured parameters are preferred to stand in context with the process 105 and may for instance be part of a machine status or a processing status of an object that is being treated or manufactured. Acquisition may also comprise reading data 150 from a repository such as a storage 190 or a log file.

Acquisition may be triggered by polling, i.e. an external acquisition request, by an event, e.g. the change of a signal or parameter related to the process 105, or based on time, e.g. after a predetermined time since the last acquisition. It is preferred that a plurality of acquisitions may take place simultaneously or in small enough a period of time that temporal correlation between the acquisitions exists. Acquired data 150 may be pre-processed locally by a processing unit that is located in the domain of the process 105, like the sampling unit 160, but it is preferred that raw data 150 is passed from step 205 and pre-processing takes place at a later step of method 200 and possibly in a different physical location, like the processing entity 180. Data 150 is preferred to be formatted in JavaScript Object Notation (JSON).

In a step 210 the data 150 is preferred to be encrypted and may then be sent to the processing entity 180. Physical location of the processing entity 180 may be dynamic and transparent to external processes so that transfer of the data 150 may require a dynamic routing protocol. In a step 215 the transferred data may be received by the processing entity 180 and decrypted if necessary.

The received data may then be stored in a step 220 for later retrieval and/or processing. It is preferred that the data 150 is stored in a storage 190 that is available to the processing entity 180 and to the service 185 running on top of it. Processing on stored data 150 may take place at a later point in time. Alternatively, processing may take place before storing. Mixed operation is also possible in which some processing is done independently of the data retrieval request and some is done in response to it. In an embodiment where processing is done on stored data 150, processing may be triggered by a data 150 retrieval request or on an automatic basis, for instance controlled by an event or regularly. The event may for instance comprise the availability of an acquisition of a predetermined parameter or the fulfilment of a predetermined condition during processing, like the value of an acquired or processed parameter exceeding a threshold. Processing will be explained in more detail below with reference to step 230.

For storing and/or processing, data 150 from different processes 105 is preferred to be kept separate, for instance in different database tables and preferably with appropriate access control in place. The storage 190 may be multi-tier in that it comprises several stages of memory that vary in access time and capacity. Fresh data 150 is generally stored in fast but small memory (e.g. RAM) and older data 150 may eventually get relocated into the next slower and larger memory (e.g. a rotating magnetic medium memory, a rotating optical medium or a streaming medium like a magnetic tape).

In an optional step 225 a request for data 150 is received by the process 185. The request may especially come from a process 195 that is adapted to further process the requested data 150. The request may comprise an indication of a predetermined process 105, an identification of a machine or component of interest, a period of time and/or one or other conditions.

It is preferred that a step 230 is then executed in order to determine the desired information on the basis of incoming and/or stored data 150.

The result of the processing in step 230 may be stored, especially in storage 190, and/or be sent directly to an interested party like said process 195. In case of storing processed data 150, an event informative of the new output may be created and also stored in said storage 190 or sent to an interested party like the process 195.

The process 195 may control or configure how processing is carried out in step 230 and how notification takes place. For controlling processing, a configuration request may be made to service 185, possibly comprising information on what processing is to be done on what data 150 at what time and how to proceed with the result. Notification may be controlled in the same way. The process 195 may for instance subscribe to a predetermined event or a predetermined kind or class of events so that the process 195 will be sent a notification every time a predetermined event occurs. In one embodiment, a first process 195 may make a notification subscription for a second process 195. The process 195 may also unsubscribe from a predetermined notification to stop notifications being sent. Notification may be limited to a predetermined period of time after configuration, e.g. 2 hours, a day or 48 hours. A subscription of process 195 to notification may be renewable to ensure continuous operation.

In an optional step 235 a response to the request of 225 is prepared and provided. The response may comprise the estimated parameter of data 150 and optionally additional information. The requesting process 195 may then latch onto the provided data 150 and process it further. A result of said processing may be used to control the process 105.

It is preferred that between the process 195 and the process 185 an API is defined that allows exchange of processed or unprocessed data 150 and/or configuration information on how processing is done and/or how notifications are processed. The API is preferred to follow the Representational State Transfer (REST) paradigm. Although REST strictly does not use session states a token may be used for service access after authentication, wherein the authentication may for example be based on predetermined credentials (like username and password). Upon successful authentication the token may be generated by service 185 and provided to process 195. Subsequent requests of the process 195 may require the token to be sent back to the service 185 in order to gain access to predetermined service resources like a service function or data 150. The server 185 may maintain session variables associated to the token. The token may also contain information in plain, scrambled, hashed or encrypted form.

The service 185 may especially be realized as a web service and the process 195 may communicate with it over an application protocol like Hypertext Transfer Protocol (HTTP) or its encrypted variant HTTPS. Exchanged data 150 may be encoded in JSON.

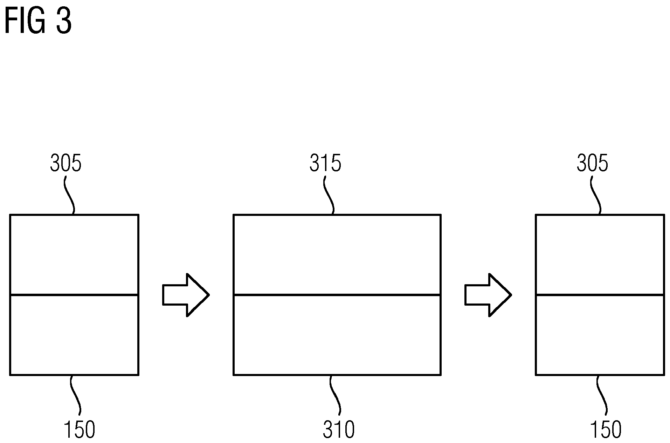

Figure 3 shows a flow chart for processing data 150. The flow chart 300 may reflect how data 150 is processed by system 100 of Figure 1.

Processing generally takes place on data 150 from an industrial process 150 and meta-information describing what processing should be done. The data 150 may comprise a value, an entity or property the value stems from, and/or time information indicative of the time the data 150 was picked up, generated, made available or refers to. Meta-information 305 may comprise an operation name, an operand definition, a result definition and a parameter influencing processing. Both the data 150 and the meta-data 305 may be given for more than one value or series of values of industrial process 105. The meta-data 305 may also refer to more than one kind of data 150.

Processing 310 will be carried out on the data 150 according to the meta-data 305. The processing 310 may comprise one or more operations, wherein an operation may be selected from a plurality of predetermined operation the service 185 supports. An operation may also be user-definable in that the upload of a procedure to service 185 may be possible. The procedure may especially come in the shape of computer program code that will be executed by service 185 when the procedure is carried out. Selection and possibly configuration of an operation is preferred to be made available through an API 315.

More than one operation may be chained to a sequence of operations. Several operations may be executed (logically and/or temporally) in parallel, opening the opportunity to configure a network of operations that may tie data 150 (and possibly associated meta-data 305) from different sources together. The result of said processing may comprise one or more new kinds or series of data 150. In another variant the result provided by processing 310 may be provided to an external process 195 which may choose to arrange for more processing through the service 185 in a separate stage. For this it may be necessary for the process 195 to feed back a previously obtained result to the service 185.

Information provided through processing 310 may again comprise the data 150 itself and possibly meta-data 305. For output data 150, the meta-data 305 may for instance comprise a deployment error, an operation specific error or a processing error. Invalid data, for example resulting from the attempt of a division by zero or a numerical operation on non-numeric data (e.g. not-a-number NaN), may thus be flagged accordingly.

Single- or multi-stage processing 310, especially if performed on time series data 150, may yield information as if there were a dedicated sensor 155 for some predetermined purpose in said industrial process 105 or on a machine that is used for carrying out the process 105. The output of processing 310 may therefore also be treated like data 150 from a "virtual" or "soft" sensor 155. Processing 310 may be used for shaping values, such as removing outliers or estimating values etc. or for changing the meaning of said information, possibly by processing it together with a constant or other data 150.

Processing 310 may involve one or more operations that may be assembled to form a more complex expression, for instance of mathematical, statistical or logical nature. For this, processing 310 may support a predetermined list of operations for a process 195 to choose from. The list may be comprehensive or expandable as desired. In the following some candidate operations for such a list is discussed in more detail, wherein the operations are grouped in exemplary classes: Boolean operations, one-argument mathematics, two-argument mathematics, multiple arguments mathematics, filter operations and merge operations (interpolation).

Generally, an operation may be supported on any data type. Exemplary common data types comprise integer64 (int), floating point number (float), double precision floating point numbers (double) and Boolean (bool).

Boolean Operations

A desired subset of known Boolean operations may be implemented. Namely, the NOT, AND, OR, NAND, NOR and XOR operations may be defined on two or more input values each. Should any one of the input values be NULL, the result is preferred to be set to NULL as well to allow for handling of errors or missing values. The "AND" and "OR" Boolean operations handle null values as in the following table, in which A and B act as input values:

| A | B | A AND B | A OR B |
|---|---|---------|--------|
| True | True | True | True |
| True | False | False | True |
| False | True | False | True |
| False | False | False | False |
| True | Null | Null | True |
| Null | True | Null | True |
| False | Null | False | Null |
| Null | False | False | Null |

Unary Math Operators

| Operation Name | Description | Operand Type | Output Type |
|----------------|-------------|--------------|-------------|
| Absolute | generates the absolute value of a numeric value | int | int |
|  |  | double | double |
| Lg | generates the lograithm in base 10 of a numeric value | int or double | double |
| Ln | generates the logrithm in base e of a numeric value | int or double |  |
| Exp | generates the exponential value of a numeric value | int or double |  |
| Cos | generates the cosine value of a numeric value | int or double |  |
| ArcCos | generates the arcus cosine value of a numeric value | int or double |  |
| Cosh | generates the hyperbolic cosine value of a numeric value | int or double |  |
| Sin | generates the sine value of a numeric value | int or double |  |
| ArcSin | generates the arcus sine value of a numeric value | int or double |  |

(continued)

| Operation Name | Description | Operand Type | Output Type |
|---|---|---|---|
| Sinh | generates the hyperbolic sine value of a numeric value | int or double | |
| Tan | generates the tangens value of a numeric value | int or double | |
| ArcTan | generates the arcus tangens value of a numeric value | int or double | |
| Tanh | generates the hyperbolic tangens value of a numeric value | int or double | |
| Sqrt | generates the square root of a numeric value | int or double | |
| Not | generates the negation of a numeric value | int or double | bool |
| | | bool | bool |
| IsNull | checks if a feature is null | int or double | bool |
| SignNegat ion | changes the sign of a numeric value | int | int |
| | | double | double |

Binary Math Operations

| Operation Name | Description | Operand 1 Type | Operand 2 Type | Output Type |
|---|---|---|---|---|
| Add | adds two numeric values | int | int | int |
| | | int or double | int or double | double |
| Subtract | subtracts two numeric values | int | | int |
| | | double | | double |
| Multiply | multiplies two numeric values | int | int | int |
| | | int or double | int or double | double |
| Divide | divides two numeric values | int or double | int or double | double |
| Power | raises the first operand to the power specified in the second operand | int or double | int or double | double |
| LessThan | compare two numeric values | int or double | int or double | bool |
| Greater Than | | | | |
| Greater OrEqual Than | | | | |
| LessThan OrEqual | | | | |
| Equals | check if two nueric values are equal | int or double | int or double | bool |
| Not Equals | | bool | bool | bool |
| And | applies the bool logic operation on the two values | bool | bool | bool |
| Or | | | | |

Multiple Operand Math Operations

| Operation Name | Description | Operand 1 Type | Operand n Type | Output Type |
|---|---|---|---|---|
| Min | compare numeric values and generate the minimum of them | int | int | int |
| | | int or double | int or double | double |

(continued)

| Operation Name | Description | Operand 1 Type | Operand n Type | Output Type |
|---|---|---|---|---|
| Max | compare numeric values | int | int | int |
| | and generate the maximum of them | int or double | int or double | double |
| Mean | generate mean of multiple numeric values | int or double | int or double | double |
| Median | generate median of multiple numeric values | int or double | int or double | double |
| Sum | generate sum of multiple numeric values | int | int | int |
| | | int or double | int or double | double |

Filter Operation

This operation works with several time-synchronized time series. For a selected time series with Boolean values, the operation removes all the entries in the time series where the selected Boolean property is "true". Data 150 may be organised in table form with timestamps in a first column, sensor values in following columns and one selected column with Boolean values. The filter operation may delete each table row where the selected column contains a predetermined value ("true" or "false").

Merge Operation

This operation can be used for merging two or more time series into one output time series which will contain old observations plus new "interpolated" observations, depending on the selected mode:

- Last-Non-Null: the last non-value X is taken for a new timestamp.
- Linear-Interpolation: the interpolated value It(X,Y) is taken for a new timestamp.
- Resample: creates synchronized equidistant timestamps first, and then applies the Linear-Interpolation mode.

Linear interpolation may be carried out like this:

$$It( X, Y, t ) = X + ( t - t(X) )( Y - X ) / ( t(Y) - t(X) )$$

where:

- X and Y are two consecutive observations;
- $t(X)$ and $t(Y)$ are two consecutive timestamps of X and Y; t is the interpolation timestamp $t(X) \leq t \leq t(Y)$;
- If X = Y, then It(X, Y, t) = X

For input values of integer64 (int) and double, the output is preferred to be always double.

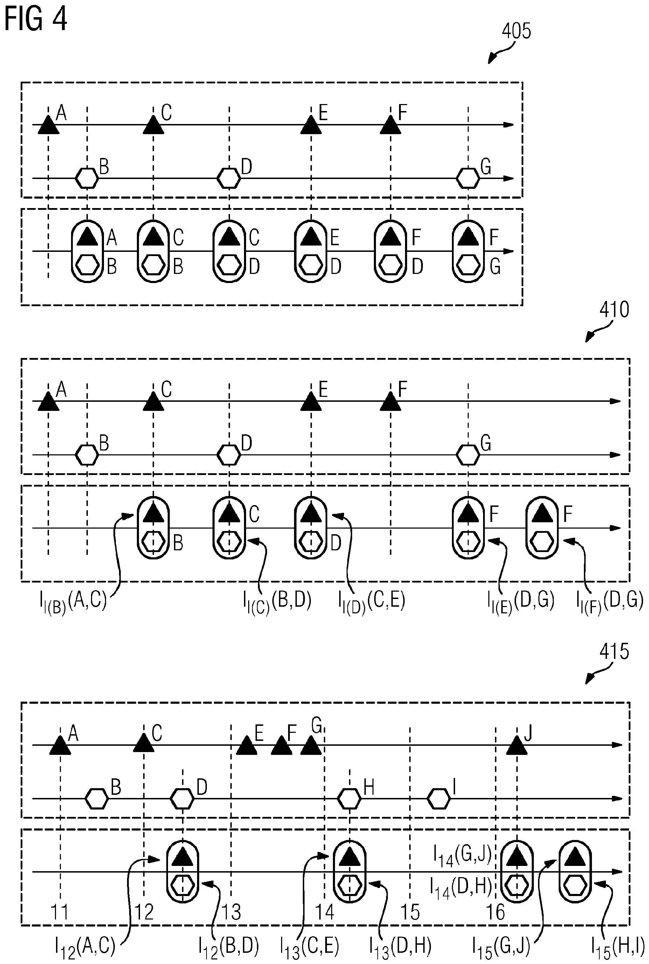

Figure 4 depicts the mentioned merge options by example of a first illustration 405 of the last-non-null interpolation, a second illustration 410 of the linear interpolation and a third illustration 415 of the resample interpolation. Each illustration 405, 410 and 415 shows from left to right two input data series 420 and 425 as well as one output data series 430. Values in the first input series 405 are symbolised as triangles, values in the second input series 410 as hexagons. Value pairs in an output series 430 is illustrated as an oval, each oval containing one triangle and one hexagon.
Last-Non-Null-Value-Interpolation is now explained with reference to the first illustration 405. For each input value A through G of any of the input series 405, 410 a value pair in the output series 430 may be generated by taking the current input value of one of the input series 420, 425 and the most recent (not null) input value of the other input series 420, 425, respectively. In a variant, generation of value pairs in the output series 430 may be triggered only by values of one preselected input series 420, 425. In yet another variant, a value pair may be generated by taking a value of one of the input series 420, 425 and assigning it the closest-in-time input value of the other input series 420, 425.
With reference to the second illustration 410, linear interpolation is now explained. If a non-synchronized timestamp is found, then for each input series 420, 425 the interpolated value It(X, Y, t) between the latest two consecutive values of the other input series 420, 425 is taken for this timestamp. The resulting value pairs are synchronized on the set of all old timestamps.

Making reference to the third illustration 415, resampling interpolation is now explained. First, new equidistant timestamps are created over a predetermined time period. Then, the linear interpolation is applied for each time series. One interpolation is performed for each value of the first and second series 420, 425 to form a value pair for the output series 430. The resulted time series are synchronized on the set of all new timestamps. The old timestamps may then be dropped.

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

**Claims**

1. Method (200) for processing data concerning an industrial process, the method (200) comprising steps of:

   - acquiring (205) a parameter related to the industrial process (105);
   - receiving (230) a processing configuration;
   - processing (230) the acquired parameter according to said configuration; and
   - providing (235) the processed parameter.

2. Method (200) according to claim 1, wherein processing (230) is performed on a plurality of time-related acquisitions of the same parameter.

3. Method (200) according to claim 1 or 2, wherein said processing (230) configuration comprises selection of an operation from a predetermined plurality of available operations.

4. Method (200) according to one of the previous claims, wherein said processing (230) configuration comprises a user-defined function.

5. Method (200) according to one of the previous claims, wherein said processing (230) configuration comprises the application of two or more operations.

6. Method (200) according to one of the previous claims, further comprising acquiring (205) another parameter related to said industrial process (105), wherein said processing (230) configuration comprises an operation combining said acquired parameter (150) and said other acquired parameter.

7. Method (200) according to one of the previous claims, wherein an event is generated (230) if the result of an operation fulfils a predetermined condition.

8. Method (200) according to one of the previous claims, wherein a notification is generated (230) if the result of an operation fulfils a predetermined condition.

9. Method (200) according to claim 8, wherein said processing (230) configuration comprises subscription to a predetermined notification.

10. Method (200) according to one of the previous claims, wherein the processed parameter is stored in storage (190).

11. Method (200) according to one of the previous claims, wherein the process (105) is controlled (235) on the basis of the processed parameter.

12. System (100) for processing data (150) concerning an industrial process (105), the system comprising:

    - a computing platform (180);
    - the computing platform (180) having a data (150) interface that is connectable, via a wide area data network, to a physical entity (160);
    - wherein the physical entity (160) is adapted to provide an acquisition of a parameter that is related to said process (105);
    - wherein the platform (180) is adapted to carry out a method (200) according to one of the above claims.

**13.** System (100) according to claim 12, wherein the physical entity comprises a data acquisition unit (160) located in a domain where the process (105) is carried out, the data (150) acquisition unit (160) comprising at least one interface (175) connectable to a sensor (155) that is adapted to acquire said parameter.

# FIG 1

FIG 2

200

205

210

215

220

225

230

235

FIG 3

305

315

305

150

310

150

# FIG 4

405

410

$I_{I(B)}(A,C)$    $I_{I(C)}(B,D)$    $I_{I(D)}(C,E)$    $I_{I(E)}(D,G)$    $I_{I(F)}(D,G)$

415

$I_{14}(G,J)$
$I_{14}(D,H)$

11    12    13    14    15    16

$I_{12}(A,C)$    $I_{12}(B,D)$    $I_{13}(C,E)$    $I_{13}(D,H)$    $I_{15}(G,J)$    $I_{15}(H,I)$

Europäisches
Patentamt

European
Patent Office

Office européen
des brevets

**EUROPEAN SEARCH REPORT**

Application Number

EP 18 15 1425

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/134733 A1 (MATURANA FRANCISCO [US] ET AL) 14 May 2015 (2015-05-14) * the whole document * ----- | 1-13 | INV. G05B19/418 G06Q10/06 |
| X | US 2017/192414 A1 (MUKKAMALA HIMAGIRI [US] ET AL) 6 July 2017 (2017-07-06) * paragraphs [0029] - [0032] * ----- | 1-13 | |

TECHNICAL FIELDS
SEARCHED       (IPC)

G05B
G06Q

The present search report has been drawn up for all claims

| Place of search | Date of completion of the search | Examiner |
|---|---|---|
| The Hague | 15 June 2018 | José Luis Meseguer |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 15 1425

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2018

| Patent document cited in search report | Publication date | Patent family member(s) | Publication date |
|---|---|---|---|
| US 2015134733 A1 | 14-05-2015 | CN 104636421 A<br>EP 2908196 A1<br>US 2015134733 A1 | 20-05-2015<br>19-08-2015<br>14-05-2015 |
| US 2017192414 A1 | 06-07-2017 | US 2017192414 A1<br>US 2017192628 A1<br>US 2017195331 A1<br>US 2017195332 A1<br>WO 2017117348 A1 | 06-07-2017<br>06-07-2017<br>06-07-2017<br>06-07-2017<br>06-07-2017 |

EPO FORM P0459

For more details about this annex : see Official Journal of the European Patent Office, No. 12/82